# DEMANDE DE BREVET EUROPEEN

(11) **EP 0 850 803 A1**
(43) Date de publication de la demande: **01.07.1998**
(21) Numéro de dépôt: 97403129.6
(22) Date de dépôt: 23.12.1997
(51) Int. Cl.: B60Q 1/40, H01H 3/44

(54) **Commutateur pour l'alimentation d'indicateurs de changement de direction sur véhicules automobiles**

(30) Priorité: 26.12.1996 FR 9616042
(71) Demandeur: MAGNETI MARELLI FRANCE, 92002 Nanterre Cédex (FR)
(72) Inventeur: Gauthier, Christian, 92200 Neuilly sur Seine (FR)
(74) Mandataire: Texier, Christian

(57) **Abrégé**

La présente invention concerne un commutateur électrique pour l'alimentation des indicateurs de changement de direction d'un véhicule automobile, caractérisé par le fait qu'il comprend deux pignons (100, 200) : l'un (100), principal, lié à l'arbre de direction ou au volant du véhicule, l'autre (200), satellite, monté à rotation sur le commutateur, les deux pignons (100, 200) étant en prise par l'intermédiaire de dentures (110, 120; 210, 220) qui imposent un entrainement séquentiel du pignon satellite (200) par le pignon principal (100) autorisant un pivotement du pignon satellite (200) sur une amplitude inférieure à une rotation pour une amplitude de déplacement du pignon principal (100) supérieure à un tour, et des moyens de détection (300) aptes à détecter le passage du pignon satellite (200) par une plage de référence pour assurer la remise à zéro du commutateur lors de cette détection.

## Description

La présente invention concerne le domaine des commutateurs électriques conçus pour l'alimentation des indicateurs de changement de direction pour véhicules automobiles.

La présente invention concerne plus précisément encore les moyens conçus pour assurer la remise à zéro automatique de tels commutateurs.

De nombreuses structures ont déjà été proposées à cette fin.

On pourra par exemple se référer aux documents suivants : FR-A-2 515 865, FR-A-2 607 961, US-A-4 393 280, FR-A-2 076 682, US-A-4315 117, DE-A-3 430 664, US-A-4 739 131, US-A-4 880 945, FR-A-2 199 708, FR-A-2 246 171, FR-A-2 326 310, DE-A-2 201 157, DE-A-2 515 754, DE-A-2 528 681, DE-A-1 037 886, FR-A-2 297 750, FR-A-2 191 235, US-A-4 335 284, DE-A-3 502 651 et DE-A-3 510 714.

A la connaissance de la Société Demanderesse la totalité des commutateurs électriques jusqu'ici proposés, adaptés pour assurer l'alimentation des indicateurs de changement de direction, sur véhicules automobiles, comprennent des moyens de remise à zéro mécaniques, comportant une came de contrôle liée à l'arbre de direction et une pièce intégrée aux commutateurs, dénommée généralement "toc", adaptée pour être actionnée par ladite came pour imposer la remise à zéro du commutateur lorsque le volant est entrainé à rotation dans le sens approprié.

La présente invention a pour but de perfectionner les commutateurs électriques existants pour permettre une remise à zéro électrique de ces commutateurs.

Ce but est atteint selon la présente invention grâce à un commutateur électrique conçu pour l'alimentation des indicateurs de changement de direction d'un véhicule automobile, caractérisé par le fait qu'il comprend deux pignons : l'un, principal, lié à l'arbre de direction ou au volant du véhicule, l'autre, satellite, monté à rotation sur le commutateur, les deux pignons étant en prise par l'intermédiaire de dentures qui imposent un entrainement séquentiel du pignon satellite par le pignon principal autorisant un pivotement du pignon satellite sur une amplitude inférieure à une rotation pour une amplitude de déplacement du pignon principal supérieure à un tour, et des moyens de détection aptes à détecter le passage du pignon satellite par une plage de référence pour assurer la remise à zéro du commutateur lors de cette détection.

Selon une autre caractéristique avantageuse de la présente invention, les dentures comprennent deux séries de dents alternées présentant respectivement une petite longueur et une grande longueur, sur le pignon satellite, et deux paires de dents associées sur le pignon principal, adaptées pour coopérer avec les dents courtes du pignon satellite, les deux dents de chaque paire du pignon principal étant séparées par une cannelure conçue pour recevoir une dent de grande longueur du pignon satellite, et les deux cannelures ainsi formées sur le pignon principal étant séparées par une nervure annulaire qui sert d'appui auxdites dents de grande longueur pour limiter la rotation du pignon satellite.

D'autres caractéristiques, buts et avantages de la présente invention apparaitront à la lecture de la description détaillée qui va suivre et en regard des dessins annexés donnés à titre d'exemple non limitatif et sur lesquels :
- la figure 1 représente une vue schématique en plan des deux pignons de commande conformes à la présente invention, en position de repos correspondant à une position "droite" du volant,
- la figure 2 représente une vue en perspective de ces deux pignons dans la même position,
- la figure 3 représente une vue en plan similaire à la figure 1, des deux pignons de commande dans une position différente du volant,
- la figure 4 représente une vue en perspective similaire à la figure 2 des deux pignons dans la même position que la figure 3 et
- la figure 5 représente une vue en perspective éclatée de l'ensemble d'un commutateur conforme à la présente invention.

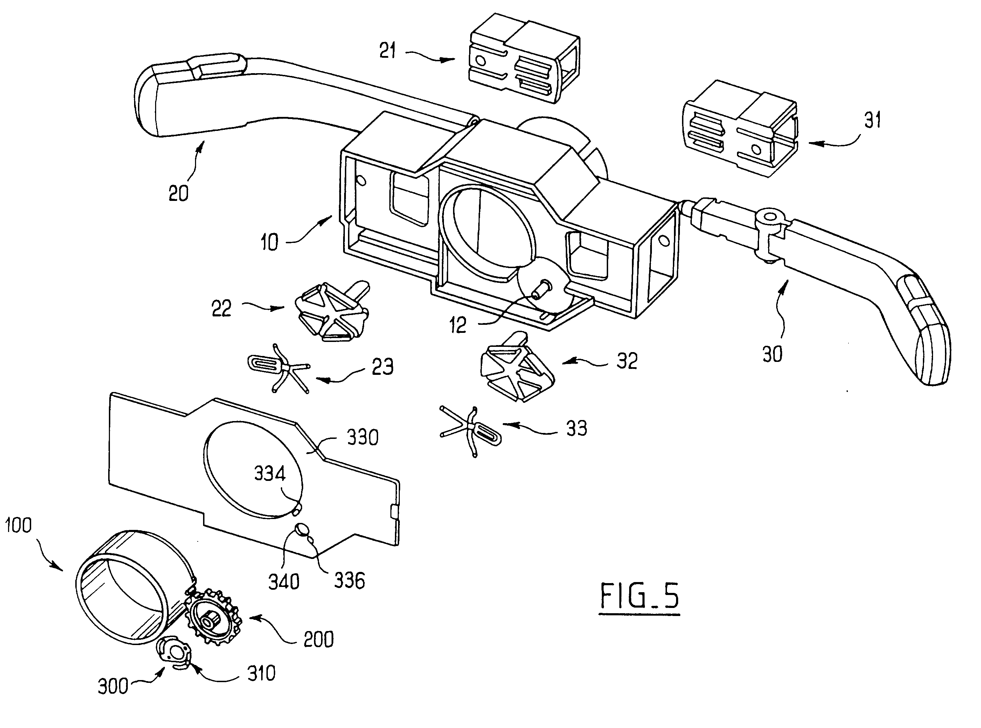

On aperçoit sur la figure 5 un commutateur conforme à la présente invention comprenant un boitier 10 qui supporte à pivotement deux manettes 20, 30 adaptées pour assurer différentes fonctions électriques, telles que commande des feux/éclairage, indicateurs de changement de direction, indicateurs sonores, essuie-lave vitre et glace, etc... lors de leur déplacement. Pour celà les manettes précitées 20 et 30 actionnent des équipages 21, 31 et/ou tiroirs 22, 32 adaptés pour déplacer des contacts électriques respectifs 23, 33.

La structure générale d'un tel commutateur, classique en elle-même, ne sera pas décrite dans le détail par la suite.

On s'attachera au contraire dans la suite de la description à préciser la structure des moyens de remise à zéro des indicateurs de changement de direction conformes à la présente invention.

Ces moyens de remise à zéro sont adaptés dans le cadre de la présente inventon pour assurer une remise à zéro électrique des indicateurs.

Plus précisément encore dans le cadre de la présente invention, les moyens de remise à zéro des indicateurs de changement de direction comprennent deux pignons 100 et 200.

Un premir pignon 100 dénommé principal par la suite, est lié à l'arbre de direction ou au volant du véhicule pour être entrainé directement par ceux-ci avec un rapport de rotation égal à 1. Le premier pignon 100 est ainsi centré sur l'axe O-O de l'arbre de direction et du volant.

Le second pignon 200, dénommé satellite par la suite, est monté à rotation sur le commutateur autour d'un axe 201 parallèle à l'axe O-O.

Les deux pignons 100 et 200 sont en prise directe par l'intermédiaire de dentures respectives 110, 120 et 210, 220. Ces dentures sont adaptées pour imposer un entrainement séquentiel du pignon satellite 200 par le pignon principal 100 lors de la rotation du volant. Selon la présente invention, cet entrainement séquentiel est adapté pour autoriser un pivotement du pignon satellite 200 sur une amplitude inférieure à une rotation complète sur 360°, pour une amplitude de déplacement du pignon principal 100 supérieure à un tour.

Le commutateur conforme à la présente invention comprend en outre des moyens de détection 300 aptes à détecter le passage du pignon satellite 200 par une plage de référence correspondant à une position sensiblement droite des roues, pour assurer la remise à zéro des indicateurs de changement de direction du commutateur lors de cette détection (c'est à dire interrompre l'alimentation de ces indicateurs de changement de direction).

Plus précisément encore, selon la présente invention, les dentures comprennent deux séries de dents droites alternées 210 et 220 présentant respectivement une petite longueur pour les dents 210 et une grande longueur pour les dents 220, sur le pignon satellite 200, et deux paires de dents associées 112, 114 et 122, 124 sur le pignon principal 100, adaptées pour coopérer avec les dents courtes 210 du pignon satellite 200.

De préférence mais non limitativement, les dents de grande longueur 220 s'étendent sur toute l'épaisseur du pignon 200, tandis que les dents 210 de petite longueur s'étendent sensiblement sur la moitié de l'épaisseur de ce pignon 200.

Les deux dents 112, 114 et 122, 124 de chaque paire 110, 120 du pignon principal sont séparées par une cannelure 113, 123 conçue pour recevoir une dent 220 de grande longueur du pignon satellite 200. Par ailleurs les deux cannelures 113, 123 ainsi formées sur le pignon principal 100 sont séparées par une nervure annulaire 130 qui sert d'appui auxdites dents de grande longueur 220 pour interdire une rotation libre du pignon satellite 200 en dehors des instants d'entrainement par coopération des dents 110, 120 et 210, 220.

Selon le mode de réalisation préférentiel conforme à la présente invention, illustré sur les figures annexées, les moyens 300 de détection comprennent une pièce 310 en matériau électriquement conducteur portée par le pignon satellite 200 et liée à rotation avec celui-ci et qui coopère avec un circuit imprimé 330.

Plus précisément encore selon le mode de réalisation préférentiel de la présente invention, ladite pièce 310 comporte une rondelle centrale 312 liée à rotation avec le pignon satellite 200 et qui porte sur sa périphérie extérieure, deux bras souples 314 et 316 sensiblement diamétralement opposés. Les bras 314 et 316 s'étendent dans une direction générale périphérique. Leurs extrémités respectives sont situées sur des rayons différents par rapport à l'axe de rotation 201 du pignon satellite 200 pour coopérer avec des pistes respectives 334 et 336 électriquement conductrices portées par le circuit imprimé 330.

Sur la figure 5 l'axe de rotation du pignon satellite 200 est matérialisé par un orifice 340 dans le circuit imprimé 300, recevant un tourillon complémentaire 12 lié au boitier 10 et engagé dans le moyeu du pignon satellite 200 pour guider ce dernier à rotation autour de l'axe 201.

La pièce 310 peut être immobilisée à rotation sur le pignon satellite 200 par tous moyens appropriés, tels que par exemple grâce à deux tétons 202, 203 venus de moulage sur le pignon 200 et engagés dans des perçages complémentaires formés dans la pièce 310.

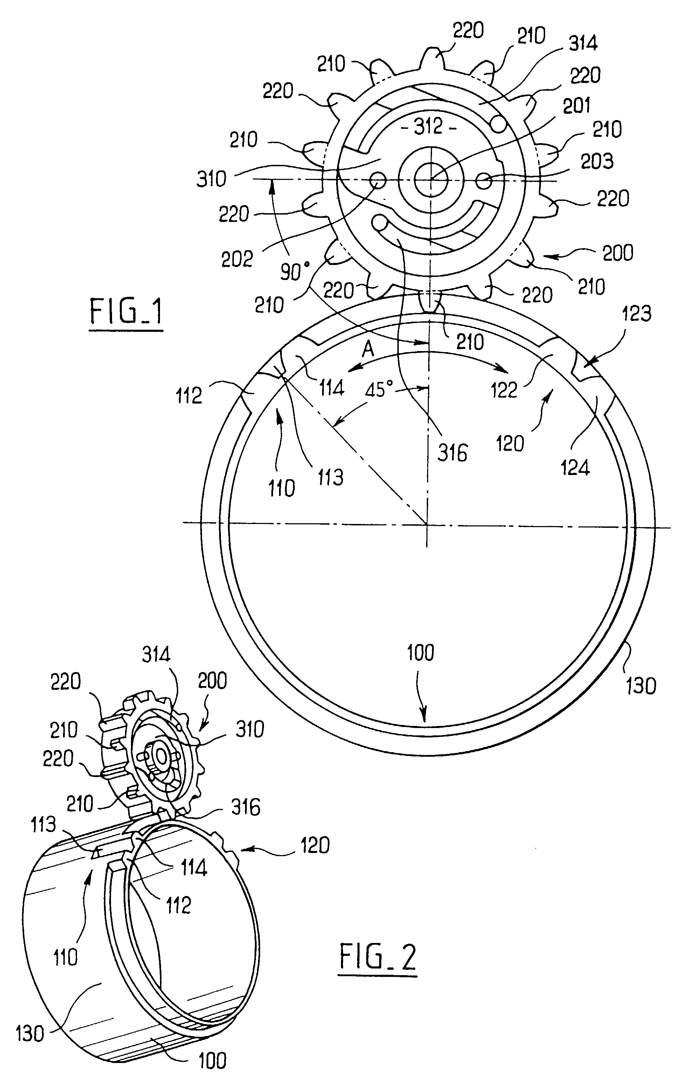

Le nombre de dents 210 et 220 prévues sur le pignon satellite 200 est adapté pour interdire que le pignon satellite 200 n'occupe, par rapport au circuit imprimé 330, la position relative de repos illustrée sur les figures 1 et 2 lorsque le volant est déplacé en dehors de cette position "ligne de direction droite" sur une plage angulaire supérieure à un angle A/2 de part et d'autre de cette position de repos, sur toute la plage de rotation autorisée pour le volant. Pour celà le pignon 200 comporte au moins 2n+1 dents dans chaque série 210 et 220, n étant égal au nombre de tours autorisés pour le volant de part et d'autre de la position de repos. Par exemple pour trois tours de volant autorisés de part et d'autre de la position de repos, il est prévu au moins 7 dents 210 et 7 dents 220 sur le pignon satellite 200.

On notera enfin qu'il est prévu entre les paires de dents 110 et 120 formées sur le pignon principal 100 une plage angulaire A. Ainsi lorsque le volant est entrainé à rotation sur un angle A/2 de part et d'autre de la position de repos roues droites, la rotation résultante du pignon principal 100 est sans effet sur le pignon satellite 200. Cet angle A est typiquement de l'ordre de 60°.

Le fonctionnement général du commutateur conforme à la présente invention est le suivant.

En position de repos roues droites, du volant, les pignons 100 et 200 occupent la position relative illustrée sur les figures 1 et 2 annexées. Une dent courte 210 du pignon satellite 200 est placée dans la gorge du pignon principal 100 entre les paires de dents 110 et 120 de ce pignon principal 100. Les deux dents longues 220 qui encadrent cette dent courte 210 reposent sur la nervure 130 du pignon principal 100. Ainsi le pignon satellite 200 est interdit d'une libre rotation autour de son axe 201. Les extrémités des bras 314 et 316 de la pièce 310 reposent sur les pistes 334 et 336 du circuit imprimé 300 et relient par conséquent électriquemet celles-ci.

Toute rotation du volant sur une amplitude angulaire de A/2 de part et d'autre de cette position de repos est sans action sur le pignon satellite 200 et par conséquent la position relative de pignon 200 et du circuit imprimé 330.

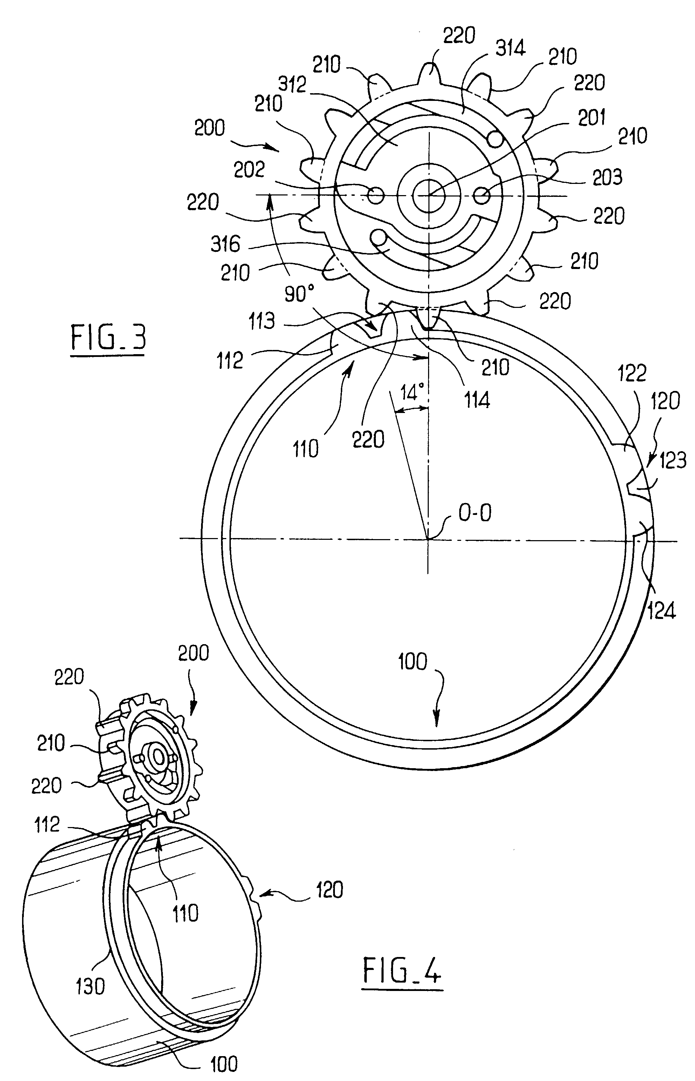

En revanche lorsque comme représenté sur les figures 3 et 4 une paire de dents 110 ou 120 du pignon principal 100 atteint la dent courte 210 précitée du pignon satellite 200 celui-ci est entrainé à rotation sur une amplitude angulaire égale 360°/(2n+1). Plus précisément au cours de cette rotation, la dent courte précitée 210 est poussée par la première des dents du pignon principal 100 dans le sens de la marche. La dent longue 220 placée en regard de la paire de dents 110 ou 120 motrice du pignon principal 100 se loge dans la cannelure 113 ou 123 correspondante. Et finalement la dent courte suivante 210 prend la place de la dent courte 210 précitée située précédemment entre les paires de dents 110 et 120. La liaison électrique entre les pistes 334 et 336 par l'intermédiaire de la pièce 310 est alors interrompue.

La rotation du volant est à nouveau sans effet sur le pignon satellite 200 tant que une paire de dents 110 ou 120 du pignon principal 100 n'a pas sollicité la dent courte 210 du pignon satellite 200 placée entre celles-ci.

Le processus d'entrainement du pignon satellite 200 qui vient d'être décrit s'applique quelle que soit le sens de rotation du volant.

Ainsi le pignon satellite 200 ne peut occuper la position de repos illustrée sur les figures 1 et 2 dans laquelle les pistes 334 et 336 sont court-circuitées, que lorsque le volant est dans une plage angulaire de +/- A°/2 de part et d'autre de la position de repos roues droites.

L'homme de l'art comprendra que dans la mesure ou le pignon principal 100 comporte deux paires de dents 110 et 120 aptes à coopérer alternativement avec les dents 210 du pignon satellite 200, à chaque rotation complète du pignon principal 100, le pignon satellite 200 est entrainé d'un angle égal à (360°x2)/(2n+1), soit environ 130° selon le mode de réalisation particulier représenté sur les figures annexées.

Lorsque la manette de commande 10 ou 20 correspondant au contrôle des indicateurs de changement de direction est entrainée, les indicateurs de changement de direction correspondant gauche ou droite sont alimentés.

La manette peut alors être ramenée automatiquement en position de repos, l'état d'alimentation des indicateurs étant maintenu par des moyens électroniques appropriés.

Des moyens logiques scrutent en permanence l'état de liaison des pistes 334 et 336 pour assurer l'interruption de cette alimentation après avoir détecté une séquence d'ouverture puis de fermeture de cet état de liaison électrique entre les pistes 334 et 336. Ainsi ces moyens logiques garantissent l'interruption de l'alimentation des indicateurs de changement de direction lorsque le volant est ramené en position "roues droites".

Bien entendu la présente invention n'est pas limitée au mode de réalisation particulier qui vient d'être décrit, mais s'étend à toutes variantes conformes à son esprit.

En particulier les moyens de détection précités comprenant une pièce électriquement conductrice 310 coopérant avec des pistes 334 et 336 portées par un circuit imprimé 330, pourront être remplacés par d'autres moyens tels que des capteurs optiques (le pignon satellite 200 peut être muni d'un disque coopérant avec un émetteur et un récepteur optiques complémentaires, par exemple un disque ajouré coopérant avec un émetteur et un récepteur disposés respectivement de part et d'autre du disque ajouré ou encore un disque muni de plages réfléchissantes codées coopérant avec un émetteur et un récepteur disposés d'un même côté en regard de la face réfléchissante du disque) ou des moyens détecteurs magnétiques (le pignon satellite 200 peut être muni d'un disque crénelé en périphérie pour coopérer avec un détecteur à bobine ou un capteur à effet hall).

Selon encore une autre variante, les moyens de détection illustrés sur les figures annexées pourront être complétées par des plages auxiliaires sur le circuit imprimé 330, adaptées pour coopérer avec les bras 314 et 316 pour indiquer la position du pignon satellite 200 et par conséquent l'angle de rotation du pignon principal 100 et donc du volant lié à celui-ci.

Selon encore une autre variante, l'état logique de liaison des pistes 334 et 336 peut être inversé. C'est à dire que les pistes 334 et 336 peuvent être isolées électriquement lorsque le volant est placé en position de repos "roues droites".

## Revendications

1. Commutateur électrique pour l'alimentation des indicateurs de changement de direction d'un véhicule automobile, caractérisé par le fait qu'il comprend deux pignons (100, 200) : l'un (100), principal, lié à l'arbre de direction ou au volant du véhicule, l'autre (200), satellite, monté à rotation sur le commutateur, les deux pignons (100, 200) étant en prise par l'intermédiaire de dentures (110, 120; 210, 220) qui imposent un entrainement séquentiel du pignon satellite (200) par le pignon principal (100) autorisant un pivotement du pignon satellite (200) sur une amplitude inférieure à une rotation pour une amplitude de déplacement du pignon principal (100) supérieure à un tour, et des moyens de détection (300) aptes à détecter le passage du pignon satellite (200) par une plage de référence pour assurer la remise à zéro du commutateur lors de cette détection.

2. Commutateur selon la revendication 1, caractérisé par le fait que les dentures comprennent deux séries de dents alternées présentant respectivement une petite longueur (210) et une grande longueur (220), sur le pignon satellite (200), et deux paires de dents associées (110, 120) sur le pignon principal (100), adaptées pour coopérer avec les dents courtes (210) du pignon satellite (200), les deux dents (112, 114; 122, 124) de chaque paire (110, 120) du pignon principal (100) étant séparées par une cannelure (113, 123) conçue pour recevoir une dent de grande longueur (220) du pignon satellite (200), et les deux cannelures (113, 123) ainsi formées sur le pignon principal (100) étant séparées par une nervure annulaire (130) qui sert d'appui auxdites dents de grande longueur (220) pour limiter la rotation du pignon satellite (200).

3. Commutateur selon l'une des revendications 1 ou 2, caractérisé par le fait que le pignon (100) principal est lié à l'arbre de direction ou au volant du véhicule pour être entrainé directement par ceux-ci avec un rapport de rotation égal à 1 et est centré sur l'axe O-O de l'arbre de direction et du volant.

4. Commutateur selon l'une des revendications 1 à 3, caractérisé par le fait que ladite plage de référence correspond à une position sensiblement droite des roues du véhicule.

5. Commutateur selon l'une des revendications 1 à 4, caractérisé par le fait que le nombre de dents (210, 220) prévues sur le pignon satellite (200) est adapté pour interdire que le pignon satellite (200) n'occupe la position relative de repos lorsque le volant est déplacé en dehors de la position "ligne de direction droite", sur toute la plage de rotation autorisée pour le volant.

6. Commutateur selon l'une des revendications 1 à 5, caractérisé par le fait que le pignon satellite (200) comporte au moins 2n+1 dents dans chaque série (210, 220), n étant égal au nombre de tours autorisés pour le volant de part et d'autre de la position de repos.

7. Commutateur selon l'une des revendications 1 à 6, caractérisé par le fait que le pignon satellite (200) comporte au moins 7 dents (210, 220) de chaque longueur.

8. Commutateur selon l'une des revendications 1 à 7, caractérisé par le fait qu'il est prévu entre les paires de dents (110, 120) formées sur le pignon principal (100) une plage angulaire A telle que lorsque le volant est entrainé à rotation sur un angle A/2 de part et d'autre de la position de repos roues droites, la rotation résultante du pignon principal (100) est sans effet sur le pignon satellite (200).

9. Commutateur selon la revendication 8, caractérisé par le fait que l'angle A est de l'ordre de 60°.

10. Commutateur selon l'une des revendications 1 à 9, caractérisé par le fait qu'il comprend une manette de commande (10, 20) adaptée pour être ramenée automatiquement en position de repos après actionnement manuel et des moyens électroniques adaptés pour maintenir l'état d'alimentation des indicateurs de changement de direction tant que la plage de référence n'est pas détectée.

11. Commutateur selon l'une des revendications 1 à 10, caractérisé par le fait que les moyens (300) de détection comprennent une pièce (310) en matériau électriquement conducteur portée par le pignon satellite (200) et liée à rotation avec celui-ci et qui coopère avec un circuit imprimé (330).

12. Commutateur selon la revendication 11, caractérisé par le fait que ladite pièce (310) comporte une rondelle centrale (312) liée à rotation avec le pignon satellite (200) et qui porte sur sa périphérie extérieure, deux bras souples (314, 316) sensiblement diamétralement opposés dont les extrémités respectives sont situées sur des rayons différents par rapport à l'axe de rotation (201) du pignon satellite (200) et coopérent avec des pistes respectives (334, 336) électriquement conductrices portées par un circuit imprimé (330).

13. Commutateur selon l'une des revendications 1 à 10, caractérisé par le fait que les moyens (300) de détection comprennent un capteur angulaire optique.

14. Commutateur selon la revendication 13, caractérisé par le fait que le pignon satellite (200) est muni d'un disque coopérant avec un émetteur et un récepteur optiques complémentaires.

15. Commutateur selon l'une des revendications 1 à 10, caractérisé par le fait que les moyens (300) de détection comprennent un capteur angulaire magnétique.

16. Commutateur selon la revendication 15, caractérisé par le fait que le pignon satellite (200) est muni d'un disque crénelé en périphérie et qui coopére avec un détecteur à bobine ou un capteur à effet Hall.

17. Commutateur selon l'une des revendications 1 à 16, caractérisé par le fait qu'il est prévu des moyens logiques qui scrutent en permanence l'état des moyens de détection (300) pour assurer l'interruption de l'alimentation des indicateurs de changement de direction après avoir détecté un retour du pignon satellite (200) dans la plage de référence.
